# EUROPEAN PATENT APPLICATION

(11) **EP 2 000 207 A1**
(43) Date of publication of application: **10.12.2008**
(21) Application number: 07109503.8
(22) Date of filing: 04.06.2007
(51) Int. Cl.: B01J 33/00, B01J 35/00, B01J 35/02, B01J 35/04, B01J 35/10, B01J 37/00, C10G 45/34

(54) **Catalyst bodies**

(71) Applicant: SHELL INTERNATIONALE RESEARCH MAATSCHAPPIJ B.V., 2596 HR Den Haag (NL)
(72) Inventor: Kluyskens, Cornelis, 1031 CM Amsterdam (NL); Montel, Stephan, 1031 CM Amsterdam (NL); Niesen, Gerardus Petrus Lambertus, 1031 CM Amsterdam (NL); Schaddenhorst, David, 1031 CM Amsterdam (NL)
(74) Representative: Zeestraten, Albertus W. J.

(57) **Abstract**

A method of strengthening a catalyst or catalyst precursor comprising a porous body having a size of at least 1 mm, and a catalyst or catalyst precursor material, the porous body along with the catalyst or catalyst precursor material having a porosity of at least 50% and an average pore size of more than 10 µm, by adding one or more waxes to the particles. One preferred method involves a wax coating on an outer layer of the particles. The present invention can facilitate handling, transport and installation of the particles.

## Description

This invention relates to a method of protecting, reinforcing, or strengthening a catalyst or catalyst precursor, especially a Fischer catalyst or catalyst precursor. The invention further relates to strengthened catalysts and catalyst precursors thus obtained, and to processes in which such strengthened catalysts and catalyst precursors are used.

The Fischer-Tropsch process can be used for the conversion of hydrocarbonaceous feed stocks into liquid and/or solid hydrocarbons. The feed stock (e.g. natural gas, associated gas and/or coal-bed methane, coal) is converted in a first step into a mixture of hydrogen and carbon monoxide (this mixture is often referred to as synthesis gas or syngas). The synthesis gas is then converted in one or more steps over a suitable catalyst at elevated temperature and pressure into paraffinic compounds ranging from methane to high molecular weight molecules comprising up to 200 carbon atoms, or, under particular circumstances, even more.

Numerous types of reactor systems have been developed for carrying out the Fischer-Tropsch reaction. For example, Fischer-Tropsch reactor systems include fixed bed reactors, especially multi tubular fixed bed reactors, fluidised bed reactors, such as entrained fluidised bed reactors and fixed fluidised bed reactors, and slurry bed reactors such as three-phase slurry bubble columns, moving bed reactors, and ebullated bed reactors.

The Fischer-Tropsch reaction is very exothermic and temperature sensitive with the result that careful temperature control is required to maintain optimum operation conditions and desired hydrocarbon product selectivity. Bearing in mind the very high heat of reaction which characterises the Fischer-Tropsch reaction, the heat transfer characteristics and cooling mechanisms of a reactor are important.

Three-phase slurry bubble column reactors potentially offer advantages over the fixed-bed design in terms of heat transfer performance. Such reactors typically incorporate small catalyst particles in a liquid continuous matrix. The synthesis gas is bubbled through, maintaining suspension of small catalyst particles and providing the reactants. The motion of the continuous liquid matrix promotes heat transfer to achieve a high commercial productivity. The catalyst particles are moving within a liquid continuous phase, resulting in efficient transfer of heat generated by the catalyst particles to the cooling surfaces. The large liquid inventory in the reactor provides a high thermal inertia, which helps prevent rapid temperature increases that can lead to thermal runaway.

The micron-sized catalyst particles must be removed from the reaction products, as at least part of the reaction products are in the liquid phase under reactor conditions. Because of the small size of the particles this separation is difficult, and is typically carried out using expensive internal or external filtration system. Other issues associated with the use of suspended catalyst particles are non-uniform distribution of catalyst throughout the reactor (with knock-on effects on cooling) and catalyst attrition.

The current invention relates to catalysts and catalyst precursors suitable for use in a slurry reactor and having a longest internal straight length of at least 1 mm and having a highly porous structure. Such catalysts and catalyst precursors can be delicate and thus difficult to handle.

Broken catalyst particles, fines and dust may be formed during transport of the porous particles. Also when installing such porous particles into a reactor broken catalyst particles, fines and dust may be formed. Very small catalyst particles are undesired because they may cause handling problems, and they may end up in the product. As discussed above, small sized particles are difficult to separate from the product.

It is thus desired to protect, reinforce, or strengthen catalysts or catalyst precursors that are highly porous and are having a size of at least 1 mm before these are transported and/or before loading into the reactor. Particles having a particle size of at least 1mm are defined as particles having a longest internal straight length of at least 1mm.

Accordingly, the present invention provides a method of strengthening a catalyst precursor comprising a porous body having a longest internal straight length of at least 1 mm and the porous body along with carrier material having a porosity of at least 50% and having pores with a size of more than 10 µm, the method comprising at least the following step:
(a) before application of one or more catalytically active components or precursors therefor to the catalyst precursor, adding one or more waxes to the catalyst precursor.

Further, the present invention provides a method of strengthening a catalyst or catalyst precursor comprising a porous body having a longest internal straight length of at least 1 mm and the porous body along with catalyst or catalyst precursor material having a porosity of at least 50% and having pores with a size of more than 10 µm, the method comprising at least the following step:
(a) before use of the catalyst or catalyst precursor, adding one or more waxes to the catalyst or catalyst precursor.

The porous bodies act as support for the catalyst/catalyst precursor material that is located thereon. The combined porous bodies and catalyst or catalyst precursor material will be referred to as "catalyst bodies". The catalyst or catalyst precursor material comprises a carrier and a catalytically active component or precursor therefor. The or each catalytically active component may be in its/their oxidised state whilst one or more waxes are added. The catalyst or catalyst precursor may then be reduced in *situ,* i.e. in the reactor, before use. The wax is typically provided over or within pores of the catalyst bodies, that is over the catalyst or catalyst precursor material, which is itself typically over or within the porous bodies. The use of the catalyst or catalyst precursor is defined as its use as catalyst, for example as catalyst for a Fischer Tropsch reaction. Preferably the catalyst is a Fischer-Tropsch catalyst.

As well as reducing dust formation and partially (at least) protecting the catalyst from oxidation during reactor set-up, the wax facilitates the mounting of the catalyst within the reactor by reducing the friction between the internal components of the reactor (such as the cooling tubes or the edge of the reactor) and the catalyst bodies and can further help mechanically strengthen the catalyst.

The porous bodies may be of regular or irregular shapes, or a mixture thereof. Such include cylinders, cubes, spheres, ovoids, etc, and other shaped polygons. In general, "size" can be considered as their longest internal straight length.

In a preferred embodiment the porous bodies have a form or shape selected from the group consisting of gauze, honeycomb, monolith, sponge, mesh, webbing, foil construct and woven mat form, or any combination of these.

The porous bodies may be a combination of forms such as those listed above. For example, the porous bodies may be made up of honeycomb shaped material and have a circular outer shape. Another example is a cylinder made from woven mat.

The porous bodies may suitably be made from refractory oxides; for example titania (TiO₂), silica (SiO₂), alumina; metals, for example stainless steel, iron or copper; or any similar inert material capable of withstanding conditions within the reactor.

The porosity within the porous bodies, i.e. the internal voidage of the porous bodies before application of the catalyst or catalyst precursor material on the porous bodies, is within the range 50-95%; preferably the internal voidage is more than 60%, more preferably more than 70%, even more preferably more than 80%, and most preferably more than 90% (with reference to the circumferential volume of the bodies). Before application of the catalyst or catalyst precursor material on the porous bodies, the porosity within the porous bodies may be even up to 98%.

The porosity of the catalyst body (i.e. including the catalyst or catalyst precursor material and the porous body) is at least 50% and is preferably at least 65%, more preferably around 85%.

The external voidage of the catalyst bodies, i.e. the porous bodies on which the catalyst has been applied, in situ in the reactor is between 5-60%, preferably less than 40% by volume, more preferably about 20% by volume.

The open volume within the catalyst bodies must be sufficient to facilitate efficient through-flow of reactants, while at the same time the specific surface area of each catalyst body should be as large as possible to increase exposure of reactants to the catalyst material. The open nature of the catalyst bodies allow the same or similar catalyst loading to be achieved as with prior micron-sized catalyst particles, such there is no reduction of the catalyst activity and STY by use of bigger catalyst bodies.

Suitable porous bodies, on which the catalyst or catalyst precursor material can be applied, can be prepared in-house or alternatively be obtained commercially. An example of a producer of suitable porous bodies is the Fraunhofer-Institute for Manufacturing and Advanced Materials in Dresden, Germany. The Fraunhofer-Institute advertises and sells, for example, melt extracted metallic fibres, and highly porous fibre structures that can be cylindrically or spherically shaped.

The catalyst or catalyst precursor material may be applied to the porous bodies as a thin layer. The catalyst or catalyst precursor material layer is preferably sufficiently thin to avoid diffusional mass transport limitation (decrease of CO and/or hydrogen partial pressure and/or unfavourable change of the hydrogen/carbon monoxide-ratio within the catalyst layer) of the syngas components within the catalyst layer. Thickness of the catalyst layer can be increased up to the onset of mass transport limitation. There is no upper limit to the thickness of the catalyst layer onto the porous bodies other than mass transport limitation and voidage of the substrate for hydrodynamic reasons.

It is preferred that the catalyst or catalyst precursor material fraction of the catalyst bodies is at least about 1% by volume and preferably greater than about 4% by volume (with reference to the volume of the catalyst bodies), with a preferred maximum of 25% by volume.

Preferably the catalyst or catalyst precursor material is applied as a layer to the porous bodies, typically in a thickness of from about 1 to about 300 microns and preferably from about 5 to about 200 microns.

General methods of preparing catalyst or catalyst precursor materials are known in the art, see for example US 4409131, US 5783607, US 5502019, WO 0176734, CA 1166655, US 5863856 and US 5783604. These include preparation by co-precipitation and impregnation. Such processes could also include freezing, sudden temperature changing, etc. Control of the component ratio in the solid solution can be provided by parameters such as residence time, temperature control, concentration of each component, etc.

The catalyst or catalyst precursor material, generally based on a catalytically active metal, may be present with one or more metals or metal oxides as promoters, more particularly one or more d-metals or d-metal oxides.

Preferably the catalyst is a Fischer-Tropsch catalyst. Fischer-Tropsch catalysts are known in the art, and typically include a Group 8-10 metal component, preferably cobalt, iron and/or ruthenium, more preferably cobalt.

Suitable metal oxide promoters may be selected from Groups 2-7 of the Periodic Table of Elements, or the actinides and lanthanides. In particular, oxides of magnesium, calcium, strontium, barium, scandium, yttrium, lanthanum, cerium, titanium, zirconium, hafnium, thorium, uranium, vanadium, chromium and manganese are most suitable promoters.

Suitable metal promoters may be selected from Groups 7-10 of the Periodic Table. Manganese, iron, rhenium and Group 8-10 noble metals are particularly suitable, with platinum and palladium being especially preferred. The amount of promoter present in the catalyst is suitably in the range of from 0.01 to 100 pbw, preferably 0.1 to 40, more preferably 1 to 20 pbw, per 100 pbw of carrier.

Preferred noble metals are platinum, palladium, rhodium, ruthenium, iridium and osmium.

References to "Groups" and the Periodic Table as used herein relate to the new IUPAC version of the Periodic Table of Elements such as that described in the 87^{th} Edition of the Handbook of Chemistry and Physics (CRC Press).

Any promoter(s) is typically present in an amount of from 0.1 to 60 parts by weight per 100 parts by weight of a porous carrier. It will however be appreciated that the optimum amount of promoter(s) may vary for the respective elements which act as promoter(s). If the catalyst comprises cobalt as the catalytically active metal and manganese and/or vanadium as promoter, the cobalt: (manganese + vanadium) atomic ratio is advantageously between 5:1-30:1.

In one embodiment of the present invention, the catalyst or catalyst precursor comprises the promoter(s) and/or co-catalyst(s) having a concentration in the Group 8-10 metal(s) in the range 1-10 atom%, preferably 3-7 atom%, and more preferably 4-6 atom%.

Typically the catalyst or catalyst precursor material comprises a carrier material such as a porous inorganic refractory oxide, preferably alumina, silica, titania, zirconia or mixtures thereof. The most preferred refractory oxide carrier material is titania. The carrier could be added onto the porous bodies prior to addition of the catalytically active metal by impregnation for example. Alternatively, the catalytically active metal and carrier material could be admixed and then added to the porous bodies. For example, a powder form of the catalyst material could be formed into a slurry, and then spray coated onto the porous bodies.

A suitable catalyst comprises cobalt as the catalytically active metal and zirconium as a promoter. Another suitable catalyst comprises cobalt as the catalytically active metal and manganese and/or vanadium as a promoter.

In a preferred embodiment, when preparing catalyst bodies use is made of porous bodies of which more than 95%, more preferably more than 99%, most preferably 100%, has a size of 1-50 mm, preferably 1-30 mm.

Catalyst bodies comprising porous bodies with a minimum size of 1 mm, and a maximum size of up to 50 mm, may be able to be supported by the slurry, and are therefore movable within the reactor vessel so as to seek the most even catalytic transfer and heat transfer, but without being fixed within the reactor.

In an alternative embodiment, the catalyst bodies are larger, for example up to 500 mm, even up to 2m, and may be immobilised within a reactor. For example, larger catalyst bodies in an immobilised slurry reactor may be fixed between cooling tubes.

In a method according to the invention, typically the catalyst body is at least partly coated in said waxes. The waxes may be present in pores within the catalyst body, especially in the small pores of the carrier material on the porous body, as well as on the surface of the catalyst body.

Preferably, the wax is substantially non-tacky below a temperature of about 40 °C.

The wax may include esters, ethers, alcohols, paraffins and alpha olefins. One preferred wax comprises a C₂₀₊ alpha olefin or paraffin, more preferably a C₂₀₋₁₀₀ alpha paraffin.

Other examples of waxes suitable for use in the present invention include natural waxes such as petroleum waxes, e.g., paraffin waxes and hydrocarbon waxes; fatty acid oil, beeswax; mineral waxes, e.g., microcrystalline montan wax; vegetable waxes such as carnauba wax and synthetic waxes such as polyethylene, polypropylene, polymethylene, chemically modified waxes, and polymerized alpha-olefins and more especially Fischer-Tropsch waxes.

One advantage of using Fischer Tropsch waxes when the catalyst is a Fischer Tropsch catalyst, is that the Fischer Tropsch catalyst and reactor is designed for contact with such waxes during the reaction and so their use to coat the catalyst before use is less likely to poison the catalyst or reactor system compared to adding foreign waxes.

Preferably the wax is a hydrocarbon wax, more preferably a branched hydrocarbon wax having a melting point ranging from 40°C to 90°C, preferably from 50°C to 80°C, and more preferably 55°C to 75°C.

Preferably therefore at least one of the waxes, preferably all of the waxes are liquid at a temperature of above 60°C.

Typically the wax comprises at least 30 wt% paraffinic molecules, more typically 50 wt% paraffinic molecules, preferably more than 70 wt% especially more than 90 wt%.

The wax may be at least 95 wt% C₁₀-C₁₀₀ .

Typically the wax is liquid at a temperature of more than 40°C, preferably more than 60°C, especially more than 80°C.

Polyethylene waxes suitable for use in the coating composition of the invention are represented by the following general formula: (-CH₂CH₂-)ₙ. Polyethylene waxes having the above general formula are commercially available from Baker Petrolite under the trademark PETROLITE(R). Preferred polyethylene waxes are those having an average molecular weight ranging from about 650 to about 30,000 and a particle size ranging between 1 micron and 140 microns.

To protect the catalyst form the atmosphere only a surface coating is sufficient. In that case only the surface of the catalyst body is coated with wax, for example using spray coating. To provide good beneficial mechanical stability preferably at least 90% of the small pores in the carrier on the porous body are filled with wax. It is also possible to fill up to 90%, or even 100% of the large pores of the catalyst body, i.e. the pores with a size of more than 10 µm. In that case the volume of the wax is larger than the volume of the catalyst body in the wax covered catalyst body.

Preferably the or each wax fills more than 10% of the pore volume of the carrier on the porous body, typically more than 30%, preferably more than 50%, more preferably more than 70%. The amount of wax deposited varies depending on the technique used to deposit the wax. For example spraying the wax onto the carrier on the porous body can typically result in less than 30% of the small pores in the carrier being filled with wax whilst dipping the catalyst body into wax can result in almost 100% of the small pores in the carrier on the porous body being filled with wax.

In a preferred embodiment, the wax is applied at the exterior of the catalyst body so that the wax can act as lubricant when installing the catalyst body into the reactor. This is especially advantageous when a relatively large, preferably with a longest internal straight length larger than 50 mm and smaller than 2 m, and optionally just fitting, catalyst body is installed between cooler tubes in a reactor.

The or each wax in step (a) may be added to the catalyst or catalyst precursor by spraying, dipping, coating, impregnating and soaking; preferably dipping.

Preferably the or each wax of step (a) is added in liquid form at a temperature of < 250°C, preferably around 200°C.

Preferably a step (b) is performed following step (a), step (b) comprising absorbing any superfluous wax with an absorbent material.

Optionally a step (c) is performed following step (a), and when step (b) is performed, also following step (b); step (c) comprising heating the catalyst to a temperature sufficient to melt the wax.

Preferably step (a) is performed outside the reactor in which the catalyst is used.

The invention also provides a method for loading a catalyst or catalyst precursor into a reactor, the method comprising:
- strengthening the catalyst or catalyst precursor using a method as defined herein;
- loading the catalyst or catalyst precursor into a reactor;
- removing at least some of the wax from the catalyst;
- using the catalyst.

Typically all of the wax is removed from the catalyst before using the catalyst.

Where a catalyst precursor is loaded into the reactor, this typically comprises an oxidised form of the active metal and thus typically the catalyst precursor is then reduced before use.

An advantage of certain embodiments of the present invention is the reduced amount of dust formation when loading the catalyst into the reactor.

A further advantage of certain embodiments of the invention is the stability of the catalyst - normally it is required to provide the active metal of a Fischer Tropsch catalyst in its oxidised form to prevent reaction of the active metal and the formation of unwanted cobalt compounds. Thus the metal oxide in the catalyst is normally reduced *in situ* to the pure metal. For certain embodiments of the invention the active metal may be provided in its less oxidised or even metallic form since the wax coating prevents or minimises the reaction of the active metal.

A further advantage of certain embodiments of the invention is that the wax layer provides a protective coating on the catalyst body which increases its mechanical stability thus making it more resistant to physical shocks and thus less likely to break during transport, handling and loading.

### EXAMPLES

Embodiments of the present invention will now be described, by way of example only, with reference to the accompanying figures in which:
Fig. 1 is a side sectional view showing a process for adding wax to a catalyst body;
Fig. 2 is a side sectional view of a mould and catalyst structure used to add wax to the catalyst body;
Fig 3 is a top view of the Fig. 2 mould and catalyst body.

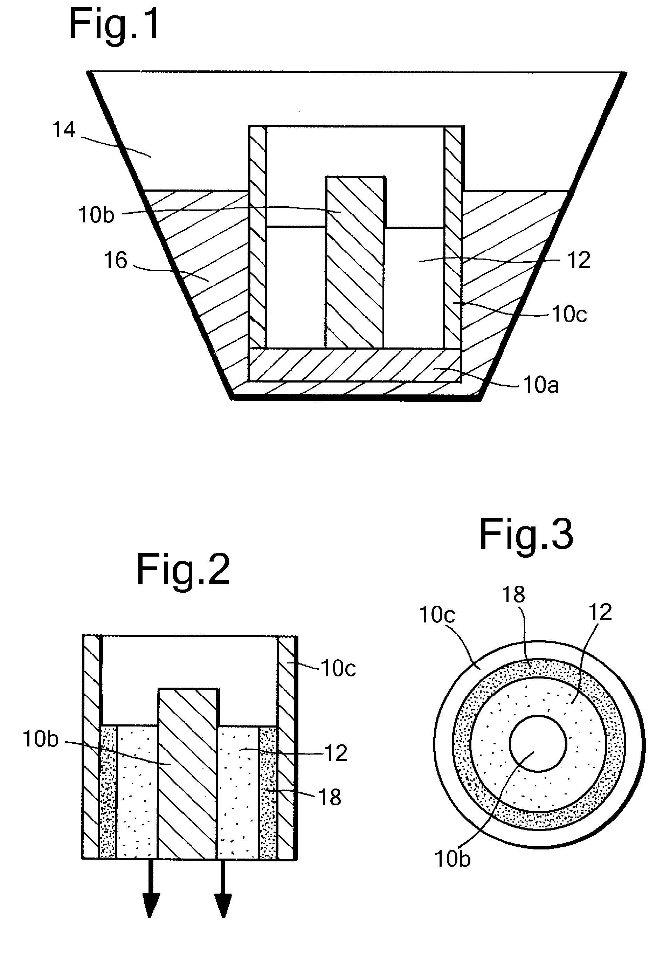

As shown in Fig. 1 a cylindrical mould 10a, 10b, 10c is provided into which a catalyst body 12 is placed. The mould in turn is placed in a vessel 14.

In this embodiment, the catalyst body 12 comprises a metal gauze having catalyst or catalyst precursor material disposed thereon, suitable to catalyse a Fischer Tropsch reaction.

Wax, which has been heated slightly to reduce its viscosity, is added to the catalyst body 12 and allowed to set. A coolant, such as solid carbon dioxide 16, is added to the vessel 14 and increases the rate of wax-setting and also allows the wax to set from the outside to the inside of catalyst body 12.

As shown in Fig. 2, a bottom 10a of the mould is removed and liquid wax is allowed to drain away from the gauze structure leaving a wax layer 18 towards the outside of the catalyst body12. Clearly the thickness of the layer 18 can be varied depending on the residence time of the mould in the coolant or other variables. For certain embodiments the wax may be allowed to completely set and so no wax is drained away.

This procedure was conducted a number of times for catalyst structures having a density of (i) 400g/1 and (ii) 200g/l. The resulting wax weight is detailed in table 1 below.

**Table 1**

| Structure Density | Draining after (min) | Weight Wax (g) |
|---|---|---|
| 400g/l | 1 | 114 |
| 400g/l | 3 | 188 |
| 400g/l | not drained | 374 |
| 200g/l | 1 | 69 |
| 200g/l | 3 | 102 |
| 200g/l | 12 | 324 |
| 200g/l | not drained | 344 |

The catalyst structure 12 may be placed in a slurry reactor, depending on the size of the catalyst structure a fixed slurry bed may be obtained. A particular benefit is that the wax provides a lubricant to allow the catalyst structure 12 to be slotted into the reactor and also increases the mechanical strength of the catalyst, which for embodiments which do not include a metal structure, is particularly beneficial.

Moreover, the wax can reduce the dust formation when loading and can also reduce the risk of oxidation with the air.

Improvements and modifications may be made without departing from the scope of the invention.

## Claims

1. A method of strengthening a catalyst precursor, said catalyst precursor comprising:
- carrier material, and
- a porous body
said porous body having a longest internal straight length of at least 1 mm and the porous body along with carrier material having a porosity of at least 50% and having pores with a size of more than 10 µm, the method comprising at least the following step:
(a) before application of one or more catalytically active components or precursors therefor to the catalyst precursor, adding one or more waxes to the catalyst precursor.

2. A method of strengthening a catalyst or catalyst precursor, said catalyst or catalyst precursor comprising:
- catalyst or catalyst precursor material, and
- a porous body;
said porous body having a longest internal straight length of at least 1 mm and the porous body along with catalyst or catalyst precursor material having a porosity of at least 50% and having pores with a size of more than 10 µm, the method comprising at least the following step:
(a) before use of the catalyst or catalyst precursor, adding one or more waxes to the catalyst or catalyst precursor.

3. A method as claimed in claim 2 wherein the catalyst or catalyst precursor is a Fischer Tropsch catalyst or precursor therefore suitable for a slurry reactor.

4. A method as claimed in any preceding claim wherein at least one of the waxes of step (a), preferably all of the waxes of (a) are liquid at a temperature of above 40°C, preferably above 60°C, more preferably above 80°C.

5. A method as claimed in either preceding claim, wherein the one or more waxes comprise a C₂₀₊ alpha olefin or paraffin, preferably a C₂₀₋₁₀₀ alpha paraffin.

6. A method as claimed in any preceding claim, wherein the wax comprises at least 30% paraffinic molecules.

7. A method as claimed in any preceding claim, wherein the porous bodies have a form or shape selected from the group consisting of gauze, honeycomb, monolith, sponge, mesh, webbing, foil construct and woven mat form, or any combination of these.

8. A method as claimed in any preceding claim, wherein the porous bodies comprise metal porous bodies, preferably aluminium or stainless steel gauze.

9. A method as claimed in any one of claims 2-8, wherein the catalyst or catalyst precursor material comprises a porous inorganic refractory oxide, such as alumina, silica, titania, zirconia or mixtures thereof especially titania as carrier material.

10. A method for transporting catalyst or catalyst precursor particles, **characterised in that** the particles are first treated according to a method according to any one of claims 1 to 9.

11. A method for installing catalyst particles or catalyst precursor particles in a reactor, **characterised in that** the particles are first treated according to a method according to any one of claims 2 to 9.
